# EUROPEAN PATENT APPLICATION

(11) **EP 1 705 198 A1**
(43) Date of publication of application: **27.09.2006**
(21) Application number: 06004613.3
(22) Date of filing: 07.03.2006
(51) Int. Cl.: C08G 18/48, C08L 51/04, B65G 17/08

(54) **Antistatic resin-made chain for article conveyance**

(30) Priority: 23.03.2005 JP 2005083891
(71) Applicant: Tsubakimoto Chain Co., Osaka 530-0018, (JP)
(72) Inventor: Murakami, Yoshihiro, Komatsubara-cho Kita-ku Osaka 530-0018 (JP); Shibayama, Katsutoshi, Komatsubara-cho Kita-ku Osaka 530-0018 (JP); Ozaki, Hajime, Komatsubara-cho Kita-ku Osaka 530-0018 (JP)
(74) Representative: Maisch, Thomas

(57) **Abstract**

The present invention provides an antistatic resin-made chain for article conveyance capable of (1) exhibiting a stable antistatic effect even in a dry or low-humidity environmental atmosphere or the like, (2) keeping the antistatic effect through washings of the resin-made chain, and (3) being subjected to horizontal recycling while maintaining the antistatic effect. The antistatic resin-made chain for article conveyance 1 may be formed endlessly by connecting a number of links with top plate 2 through connecting pins 8. The link with top plate 2 may be made of plastics by integral molding of a synthetic resin material, at least one high-molecular weight antistatic agent, and, optionally, at least one sliding agent.

## Description

This application claims priority under 35 U.S.C. §119(a) to Japanese Patent Application No. 2005-083891, filed March 23, 2005. The foregoing application is incorporated by reference herein.

### FIELD OF THE INVENTION

The present invention generally relates to an antistatic resin-made chain for conveying articles. Particularly, the instant invention relates to an antistatic resin-made chain for article conveyance comprising a plurality of links having a top plate formed of a synthetic resin material containing at least one high-molecular antistatic agent and, optionally, at least one sliding agent.

### BACKGROUND OF THE INVENTION

As a means for conveying articles such as, without limitation, foods (e.g., vegetable, fresh fish, bread, wheat noodle, and meat), medicines, containers (e.g., cans, bottles, and glass bottles), electronics, textiles, resin molded products and the like, a conveyor chain is generally used to move the articles on a top plate with a flat surface. An article conveying resin-made chain formed by mutually connecting a plurality of links with a top plate formed of a synthetic resin material by connecting pins is presented in Japanese Patent Application Laid-Open No. 7-309417.

In the course of using such an article conveying resin-made chain, the flow of articles is often stopped during conveyance by a stop bar. In order to increase the ease of slipping and standing the articles at the stop bar when stopped, it is desirable for the top plate to have improved sliding characteristics. Therefore, in the above-referenced article conveying resin-made chain, a penetration layer may be formed on the top plate of a link by impregnation of a solution containing fluorine-based resin fine particles. The formation of the penetration layer can provide an antistatic effect of some degree. Additionally, the layer can provide improved sliding performance by reducing the friction of the link with top plate. However, the antistatic effect of the layer may not be sufficient.

Generally, the resin-made chain is charged with static electricity caused by the sliding or rubbing of an article, a receiving rail, a guide or the like during the conveyance of articles. The article itself may also becomes charged by the rubbing with the top plate or guide. Indeed, even metallic articles can be become charged without being earthed as the conveyance system typically is made of resin to protect the articles from being scratched by metal parts.

In general, a charged electrostatic potential of 2 kV or less is free of problems such as electric shock and dust attraction. However, when the static electricity of the resin-made chain is10 kV or more, there is a risk of an electric shock if discharged to a human body and there may be a fire hazard depending on the surrounding environment. When the article is a glass bottle or plastic bottle of a nonconductor (insulating material), the charged static electricity may also cause contamination of the article by causing the adhesion of dust, fungi, bacteria or the like, although the danger of electric shock may be eliminated because of creepage discharge.

In order to make the conveyor resin-made chain more antistatic or conductive, carbon fibers, carbon powders (e.g., ketjen black), metal fibers or the like have been added to the synthetic resin material. However, these chains are not preferred because carbon-based chains are blackened and metal fiber-based chains involve the danger of inclusion of the metal fiber as a foreign matter, particularly in the conveyance of food or drink.

As an alternative measure for addressing the above issues, the link with the top plate was conventionally formed from a synthetic resin material comprising a surfactant, i.e., a low-molecular weight antistatic agent (anionic activating agent, cationic activating agent, nonionic activating agent, etc.), in order to increase the antistatic properties of the resin-made chain.

However, low-molecular weight antistatic agents are readily affected by environmental factors such as humidity. Indeed, the effectiveness of the low-molecular weight antistatic agents is reduced in different humidity conditions such as in a low humidity environment (dry atmosphere such as during the winter). Furthermore, low-molecular weight antistatic agents are inferior for prolonged use because they can easily be removed by water washing or wiping of the belt. Additionally, low-molecular weight antistatic agents tend to bleed out to the surface of the resin-made chain over time and may contaminate the surrounding area and cause the deterioration of the surrounding surfaces.

The low-molecular weight antistatic agent in these chains is present within the resin and it migrates to the surface while avoiding crystals and the like of the resin. However, if the resin has high crystallinity, such as, e,g., a polyacetal based resin, a long time is needed for the antistatic effect to emerge. The low-molecular antistatic agent is also not suitable with a polyamide with a high Tg (glass transition temperature) because its migration speed to the surface is greatly influenced by the Tg of the resin. Further, a resin-made chain containing the low-molecular antistatic agent is not horizontally recyclable (i.e., recyclable in the same quality level) and is subjected to cascade recycling (i.e., low-quality level recycle) with a reduced recycling ratio of raw material.

### SUMMARY OF THE INVENTION

The present invention solves the problems and shortcomings of the - conveyor belts described above and provides an antistatic resin-made chain for article conveyance capable of exhibiting a stable antistatic effect in a dry or low-humidity environmental atmosphere or the like with minimized environmental dependency. The antistatic effect helps prevent electric shock or adhesion of dust, fungi, bacteria or the like. Furthermore, the antistatic effect is kept in the antistatic resin-made chains of the instant invention even during washing (e.g., water washing). The antistatic resin-made chains of the instant invention also can be horizontally recycled and recycled chains will maintain their antistatic properties.

An antistatic resin-made chain for article conveyance according to a first embodiment of the present invention comprises a plurality of links having a top plate mutually connected through connecting pins. The link comprising a top plate is formed of a synthetic resin material containing a high-molecular weight antistatic agent.

In accordance with a particular embodiment of the present invention, the high-molecular weight antistatic agent is based on a polyether.

According to yet another embodiment of the instant invention, the high-molecular antistatic agent is a polyether ester amide block polymer or a polyether polyolefin block polymer.

In another embodiment of the instant invention, the synthetic resin material of the antistatic resin-made chain also contains a sliding agent. Accordingly, the sliding and antistatic characteristics of the chain are improved. As a result, the static charging to the chain is suppressed while the contact sliding of the chain with the receiving rail is smoothed during conveyance. Additionally, when an article under conveyance is stopped and stood by a stop bar or the like, the friction of the resin-made chain against the article is minimized to ensure its smooth slippage without the creation of electrostatic potential in the article.

Inasmuch as the link with top plate constituting the resin-made chain is formed of a synthetic resin material containing a high-molecular weight antistatic agent, the antistatic resin-made chain exhibits a stable antistatic effect even if used in a dry or low-humidity environmental atmosphere. Furthermore, electric shock and the adhesion of dust, fungi, bacteria or the like to articles is prevented in any environmental atmosphere. The antistatic effect is also stable through washings, such as with water, of the resin-made chain or part thereof. Inasmuch as the high-molecular weight antistatic agent can be considered to be a permanent antistatic agent, recycled or re-used chains retain the antistatic effect. Consequently, the chain can be subjected to horizontal recycling to avoid loss of raw material.

### BRIEF DESCRIPTION OF THE DRAWINGS

Figure 1 is a side view of an antistatic resin-made chain for article conveyance that is a preferred embodiment of the present invention. **W:** articles; **1:** antistatic resin-made chain for article conveyance; **2:** link with top plate; **3:** link body; **7:** top plate; **9:** receiving rail;. **10:** return roller; **S1, S2:** sprockets.

Figure 2 is a top view showing a part of the antistatic resin-made chain. **4, 5:** hinge parts.

Figure 3 is a side view showing a part of the antistatic resin-made chain. **4a:** pin hole; **8:** connecting pin.

Figure 4 is a partial back view having a part of the antistatic resin-made chain as a section. **6:** hinge part; **5a, 6a:** pin hole.

Figure 5 is a perspective view taken along the line X-X of Fig. 1. **9:** receiving rail; **9a:** support block.

Figure 6 is an illustrative view showing a manner for measuring the electrostatic potential of a resin-made chain. PC: resin made chain; **K:** measuring point.

### DETAILED DESCRIPTION OF THE INVENTION

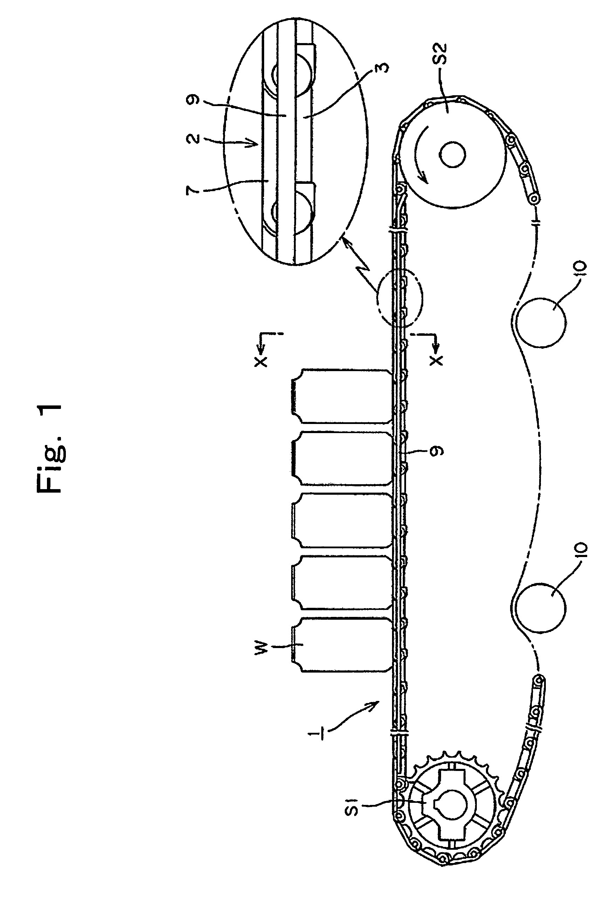

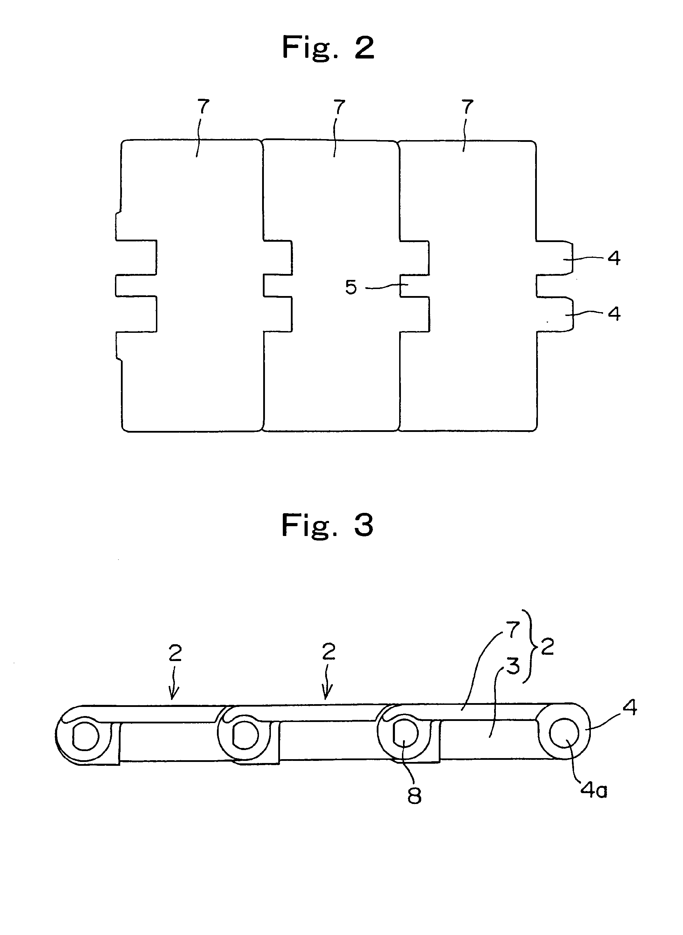

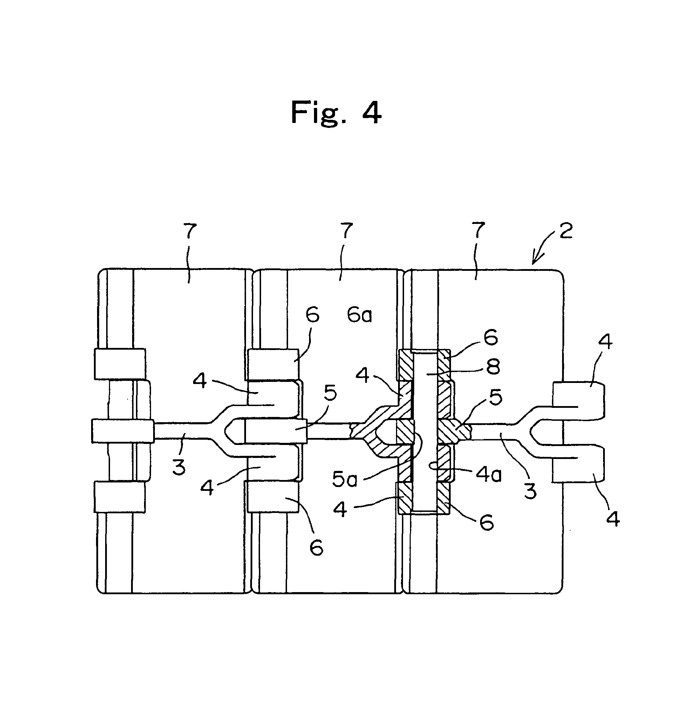

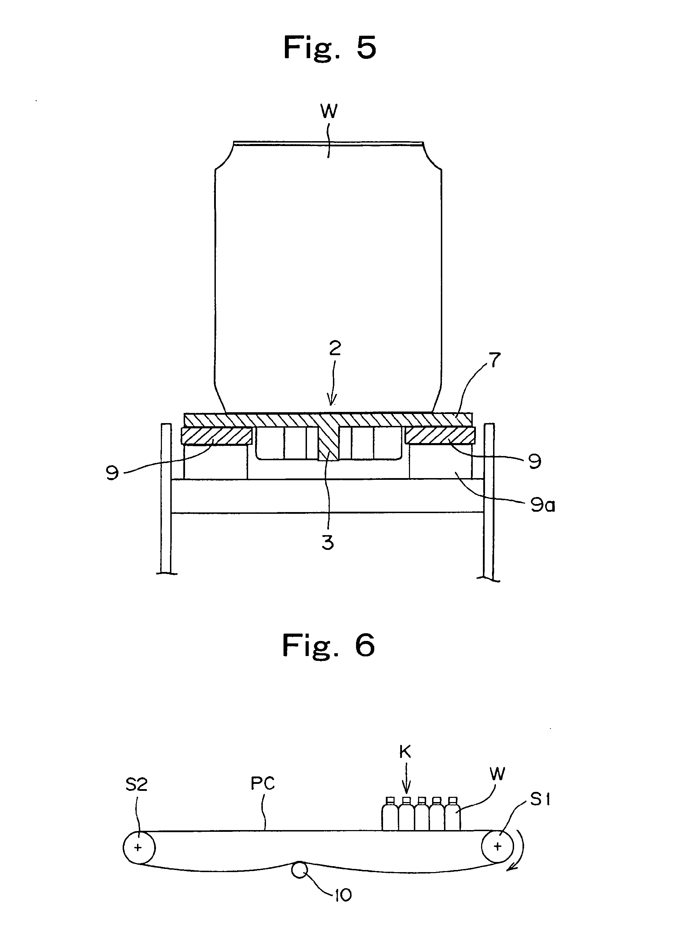

A preferred embodiment of the present invention is described in Figures 1 to 5. Figure 1 is a side view showing a setting state of an antistatic resin-made chain for article conveyance 1, Figure 2 is a plan view showing a part of the antistatic resin-made chain **1,** Figure 3 is a side view showing a part of the antistatic resin-made chain **1,** Figure 4 is a sectional back view having a part of the antistatic resin-made chain **1** as a Section, and Figure 5 is a perspective view taken along the line X-X of Figure 1.

The antistatic resin-made chain for article conveyance 1 may be formed endlessly, as described hereinbelow, by connecting a number of links with top plate **2** through synthetic resin-made or metallic connecting pins **8.** The link with top plate **2** comprises a link body **3** and a top plate **7** located on the upper part thereof which may be made of plastics by integral molding of a synthetic resin material. If the width of the top plate (the longitudinal width in an advancing direction) is gradually narrowed from the center toward both outer sides or formed in a broad crescent form, then curved traveling on a horizontal plane is facilitated.

The top plate **7** has a hinge part **4** having a pin hole **4a** on one side of the link body **3** and a hinge part **5** having a pin hole **5a** and a hinge part **6** having a pin hole **6a** on the other side. The antistatic resin-made chain for article conveyance 1 may be created by forming hinges by inserting a connecting pin **8** to each pin hole **4a, 5a,** and **6a** of the respective hinge parts **4, 5,** and **6** of the adjacent links with top plate **2.** The above hinge placements are merely exemplary of a particular embodiment and can be placed in different arrangements on the links to facilitate the hinging of the links.

The antistatic resin-made chain for article conveyance **1** may be laid around sprockets **S1** and **S2** as shown in Figure 1 and run on a receiving rail **9** supported by a support block **9a** (see Figure 5) while sliding in contact therewith to convey articles W placed on the chain. A return roller **10** may be present to support the return route-side chain.

The link with top plate **2** constituting the antistatic resin-made chain for article conveyance 1 may be integrally molded of a synthetic resin material containing a high-molecular weight antistatic agent and, optionally, a sliding agent. The material of the synthetic resin of the resin-made chain of the present invention can be any synthetic resin of the art. For example, the synthetic resin can be, without limitation, an engineering plastic such as polyacetal (POM), polyamide (PA), polybutylene terephthalate (PBT), polycarbonate (PC), polypropylene (PP), polyethylene (PE) and the like. Generally used additives such as processing stabilizers, fillers, and/or dispersing agents can be added to the synthetic resin material.

The antistatic resin-made chain of the instant invention comprises at least one high-molecular weight antistatic agent. In a particular embodiment, the high molecular weight antistatic agent has a molecular weight greater than about 10,000. When selecting a high-molecular weight antistatic agent to be used in the synthesis of the antistatic resin-made chains of the present invention, the melting point and/or melting viscosity of the agent may be considered. In a preferred embodiment, a polyether-based high-molecular weight antistatic agent is used. Examples of the polyether-based high-molecular weight antistatic agent include, without limitation, a polyether polyolefin block polymer, a polyether ester amide block polymer, and the like.

The antistatic resin-made chain of the instant invention optionally comprises at least one sliding agent. Sliding agents include, without limitation, fluorine-based resins (e.g., polytetrafluoroethylene (PTFE) and polychlorotrifluoroethylene), silicone resins, fatty acid esters and the like. In a preferred embodiment, the sliding agent is a fatty acid ester.

The link with top plate **2** may be formed of a synthetic resin material obtained by adding about 5 to 30% by weight of a polyether-based high-molecular antistatic agent to about 95 to 70% by weight of a synthetic resin, optionally, containing about 1 to 3% by weight of at least one sliding agent. The mixing quantity of the high-molecular weight antistatic agent is preferably set to 5% by weight or more to insure antistatic performance and set to less than or about 30% by wait due to considerations of the injection moldability (productivity) and the mechanical characteristics of the resultant chain. The upper limit is also considered to be about 30% by weight because higher levels of antistatic agent do not result in an appreciable gain in antistatic effect.

Although the link with top plate is integrally molded of a synthetic resin material containing a high-molecular weight antistatic agent in the preferred embodiment, it is only the top plate of the link that needs to be formed of the synthetic resin material containing the high-molecular weight antistatic agent. In this case, for example, the link body can be made of stainless steel or formed or integrally molded of a synthetic resin material different from that of the top plate and attached to the top plate by any means such as a small screw, pins, or an adhesive.

### EXAMPLE

Electrostatic potential measurement tests were carried out to determine the electrostatic potential for a resin-made chain comprising polyacetal (POM)-made links with top plate which were mutually connected through stainless steel connecting pins. In this test, as shown in Figure 6, a resin-made chain PC was wrapped around reinforced polyamide-made sprockets **S1** and **S2** and run at a fixed speed. The electrostatic potential of the resin-made chain PC was measured at a measuring point **K** in the vicinity of the driving sprocket **S1** after the lapse of a fixed time. Since the resin-made chain is influenced by the material of the receiving rail with which the chain makes slide contact, the test was carried out using various kinds of receiving rails generally used for conveyance chains. The following apparatuses were used for the test: STATTRON DX (Shishido Electrostatic, Ltd.; Tokyo, Japan) to measure electrostatic potential and TR-72U Logger (T&D; Nagano, Japan) to measure temperature and humidity. The test results are shown in Tables 1 to 3. Table 4 shows measurement values of the resistivity of the synthetic resin material which gives an index of its insulating properties.

**Table 1: Measurement Value of Charged Electrostatic Potential**

| | Comparative Example | | Conventional Example | | Inventive Example | |
|---|---|---|---|---|---|---|
| Resin-made chain | POM | | POM + Low- molecular antistatic agent | | POM + High-molecular antistatic agent | |
| Conveying article | Steel can | Glass bottle | Steel can | Glass bottle | Steel can | Glass bottle |
| Rail R1 | 10.0 kV | 9.3 kV | 5.7 kV | 10.9 kV | 2.1kV | 2.0 kV |
| Rail R2 | 4.8 kV | 7.1 kV | 3.6 kV | 6.9 kV | 0.3 kV | 0.2 kV |
| Rail R3 | 7.9 kV | 6.8 kV | 2.7 kV | 7.1 kV | 0.2 kV | 0.2 kV |
| Rail R4 | 7.2 kV | 6.6 kV | 5.8 kV | 8.8 kV | 0.4 kV | 0.3 kV |

### [Antistatic Agent Mixed]

Low-molecular antistatic agent: Anionic active agent (3 wt%)

High-molecular antistatic agent: Polyether ester amide block polymer (10 wt%)

### [Material of Rail]

Rail R1: Ultrahigh-molecular weight polyethylene
Rail R2: MC nylon
Rail R3: Stainless steel
Rail R4: Ultrahigh-molecular weight polyethylene containing low-molecular antistatic agent

### [Relative Humidity in Measurement]

Steel can: 40-55%RH

Glass bottle: 30-40%RH

| Rail R3: Made of stainless steel | | | | |
|---|---|---|---|---|
| | Conventional Example | | Inventive Example | |
| Resin-made chain | POM + Low-molecular antistatic agent | | POM + High-molecular antistatic agent | |
| Relative Humidity | 55%RH | 30%RH | 50%RH | 28%RH |

**Table 2: Effect of Humidity on Charged Electrostatic Potential**

| | | | | |
|---|---|---|---|---|
| Chain Charged Potential | 2.4 kV | 7.3 kV | 0.1 kV | 0.7 kV |
| | | | | |

| Rail R4: Made of ultrahigh-molecular weight polyethylene containing lo-molecular antistatic agent | | | | |
|---|---|---|---|---|
| | Conventional Example | | Inventive Example | |
| Resin-made chain | POM + Low-molecular antistatic agent | | POM + High-molecular antistatic agent | |
| Relative Humidity | 45%RH | 25%RH | 42%RH | 25%RH |
| Chain Charged Potential | 5.8 kV | 9.1 kV | 0.2 kV | 1.9 kV |

### [Antistatic Agent Mixed]

Low-molecular antistatic agent: Anionic active agent (3 wt%)

High-molecular antistatic agent: Polyether ester amide block polymer (10 wt%)

**Table 3: Measurement Value of Electrostatic Potential (Conveyance of glass bottle) [Antistatic Agent Mixed] High-polymer antistatic agent: Polyether ester amide block polymer**

| Resin-made chain | POM + High-molecular antistatic agent | |
|---|---|---|
| High-molecular antistatic agent | 5 wt% | 10 wt% |
| Rail R1 | 3.4 kV | 2.0 kV |
| Rail R2 | 1.9 kV | 0.2 kV |
| Rail R3 | 2.0 kV | 0.1 kV |
| Rail R4 | 1.1 kV | 0.4 kV |

**Table 4: Measurement Value of Resin; PAA; High-molecular antistatic agent; Polyether ester amide block polymer**

| | Volume Resistivity (Ω.cm) JIS K6911 | Half-life (see) JIS L1094 |
|---|---|---|
| Genera POM | 1.0×10¹⁶ | 120 or more |
| POM + Anionic active agent | 1.1×10¹⁵ | 86 or more |
| POM + PAA (5 wt%) | 4.4×10¹⁴ | 3.3 |
| POM + PAA (10 wt%) | 9.3×10¹³ | 0.7 |

### Measurement Conditions:

Resistivity: Temperature 23±2°C /Humidity 50±5%RH

Half-life: Temperature 23±2°C /Humidity 50±5%RH

Table 1 shows that the charged electrostatic potential of the antistatic resin-made chain of the present invention is extremely low in the use of every rail (R1-R4) compared with the charged electrostatic potential of the resin-made chains of the comparative example and the conventional example. Particularly, the charged electrostatic potential of the antistatic resin-made chain of the present invention is of a low enough voltage as to not present an electric shock risk. Indeed, when the rails was made of MC nylon (R2), stainless steel (R3), or ultrahigh-molecular weight polyethylene containing low-molecular antistatic agent (R4) the electrostatic potential was 0.4 kV or less regardless of the item conveyed. Even when the rail was made of ultrahigh-molecular weight polyethylene (R1), the electrostatic potential was about 2.1 kV.

Table 2 shows that the resin-made chain comprising a synthetic resin material containing a high-molecular antistatic agent of the present invention can exhibit the antistatic effect in every environmental atmosphere. The charged electrostatic potential in the inventive example was as low as about 1/10 to about 1/20 of that in the conventional example, even in an environmental atmosphere with low humidity (25-30%RH).

Further, Table 3 demonstrates that the antistatic resin-made chain of the present invention never causes electric shocks. Indeed, a charged electrostatic potential of only about 2.0 kV or less is seen in the use of the rails R2 to R4 by mixing only 5 wt% of the high-molecular weight antistatic agent and a charged electrostatic potential of only about 2.0 kV was observed in the use of the ultrahigh-molecular weight polyethylene-made rail R1 by using 10 wt% of the high-molecular weight antistatic agent.

While certain of the preferred embodiments of the present invention have been described and specifically exemplified above, it is not intended that the invention be limited to such embodiments. Various modifications may be made thereto without departing from the scope and spirit of the present invention, as set forth in the following claims.

A patent document is cited in the foregoing specification in order to describe the state of the art to which this invention pertains. The entire disclosure of this citation is incorporated by reference herein.

## Claims

1. A conveyor chain comprising a plurality of links, wherein said link is connected to a top plate, wherein said top plate comprises a synthetic resin material and at least one high-molecular weight antistatic agent.

2. The conveyor chain according to claim 1, wherein said high-molecular antistatic agent is based on a polyether.

3. The conveyor chain according to claim 2, wherein said high-molecular weight antistatic agent is selected from the group consisting of a polyether ester amide block polymer and a polyether polyolefin block polymer.

4. The conveyor chain according to claim 1, wherein the synthetic resin material comprises at least one sliding agent.

5. The conveyor chain according to claim 4, wherein said sliding agent is selected from the group consisting of fluorine-based resins, silicone resins, and fatty acid esters.

6. The conveyor chain according to claim 5, wherein said sliding agent is a fatty acid ester.

7. The conveyor chain according to claim 1, wherein said top plate and link are connected by at least one of the group consisting of screws, pins, and adhesives.

8. The conveyor chain according to claim 1, wherein said top plate and link are integrally molded.

9. The conveyor chain according to claim 1, wherein said top plate comprises about 5% to about 30% of said high-molecular weight antistatic agent by weight.
